# EUROPEAN PATENT APPLICATION

(11) **EP 1 686 311 A2**
(43) Date of publication of application: **02.08.2006**
(21) Application number: 06100958.5
(22) Date of filing: 27.01.2006
(51) Int. Cl.: F21S 9/02, F21V 8/00, F21Y 101/02, F21W 111/00

(54) **Emergency lighting device**

(30) Priority: 28.01.2005 ES 200500189 U
(71) Applicant: Legrand Espanola, S.A., Torrejon de Ardoz 28850 Madrid (ES)
(72) Inventor: Larrea Uria, Angel, 28850, Madrid (ES)
(74) Representative: Elzaburu Marquez, Alberto

(57) **Abstract**

An emergency lighting device of the type used on stairs or ramps for indicating evacuation routes comprising: a module (5) containing components that provide, respectively, the signaling light and the emergency light in the circumstances foreseen for each case; a cover (11); a diffusing element (13) for the emergency light located on the central portion of the cover (11); an intermediate plate (9) between the module (5) and the cover (11) made of a light transmitting material that is configured for receiving on its lower portion the signaling light provided by a plurality of LEDs (29) and transporting it outwards from the lighting device; and a body (3) on which the remaining elements of the lighting device are integrated.

## Description

### FIELD OF THE INVENTION

The present invention refers to an emergency lighting device and more particularly to an emergency lighting device of the type used as pilot lamps on stairs and ramps for indicating evacuation routes in a power failure situation.

### BACKGROUND OF THE INVENTION

The emergency lighting devices used as pilot lamps are widely used in public buildings and other facilities for providing lighting when there is a failure in the power supply to the main lighting system in the building or facility.

In general, an emergency lighting device includes a signaling light source that is activated when the electric power supply works normally and an emergency light source which is activated when there is an electric power supply failure and which is provided with energy by a rechargeable battery.

In the known art, the emergency light and the signaling light are projected outwards from the lighting device in a similar manner, which makes it difficult to distinguish them. The present invention is geared towards solving this drawback as well as to provide an easy-to-install emergency lighting device.

### SUMMARY OF THE INVENTION

The emergency lighting device according to the present invention comprises a body in which the following are integrated: a module with the components providing, respectively, the signaling light and the emergency light in the circumstances foreseen for each case, a cover with a light diffusing element fixed thereto in its central portion, and, between both components, an auxiliary plate and an intermediate plate made of a light transmitting material that is configured for receiving on its lower portion the signaling light provided by a plurality of light emitting diodes (called hereinafter LEDs) and transporting it outwards from the lighting device to make an illuminated line that follows the outer edge of the plate.

The auxiliary plate is configured so that it facilitates integration of the intermediate plate in the aforementioned body.

The lighting device can incorporate the intermediate plate configured so that it transports the signaling light towards a front area, or so that it transports it towards a side area of the lighting device, which constitutes a possibility of great interest for adapting it to different requirements.

The lighting device body comprises a turret which is hollow in its central area and which, on one hand, facilitates assembly by clipping of all its components, and on the other hand allows passage of a screw for fixing the lighting device to a flush mounting box located at the desired location.

The lighting device may also comprise an adaptor part which adapts to a universal flush mounting box configured as a winged U shape, with a threaded duct projecting from the center of its base in order to receive said screw and slits on the wings in order to allow introducing fixing means through them and through the diametrical openings provided to that effect on the universal flush mounting box.

Other features and advantages of the present invention will be gathered from the detailed description made below in reference to the attached drawings.

### BRIEF DESCRIPTION OF THE DRAWINGS

Figure 1 shows a perspective exploded view of an emergency lighting device according to the present invention with the signaling light projected onto its front area.
Figure 2 shows a cross sectional view of the lighting device shown in Figure 1 and Figure 3 shows an enlarged view of its part A.
Figures 4 and 5 show the same view as Figures 2 and 3 for a lighting device according to the present invention with the signaling light projected onto its side area.
Figure 6 shows a perspective exploded view of an emergency lighting device according to the present invention assembled on a universal flush mounting box.

### DETAILED DESCRIPTION OF THE INVENTION

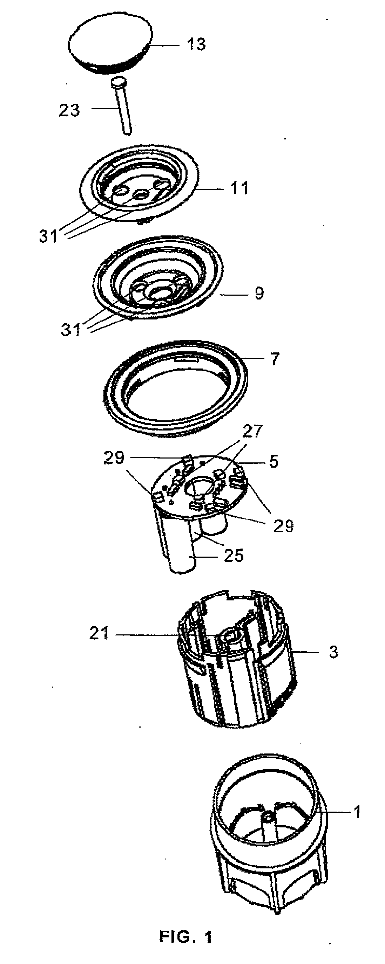

Following Figures 1-3 a lighting device according to the present invention can be observed formed by a body 3, a module 5 containing all the components providing the signaling light and the emergency light when the circumstances foreseen in each case arise, an auxiliary plate 7, an intermediate plate 9, a cover 11 and a diffusing element 13.

The body 3 has a hollow cylindrical shape. In a manner known in the art, it has openings suitable for the passage of electrical wires through which the components of module 5 are connected to an electric power supply source and can be made of an opaque material such as can be a plastic material by means of an injection process in a mold.

According to the invention, the body 3 includes a hollow turret 21 which facilitates assembly by clipping of all the components of the lighting device. On the other hand, the hollow turret 21 is provided so that a screw 23 passes through it, fixing the lighting device to the flush mounting box 1. As can be seen in Figure 1, the diffusing element 13 is fixed to the cover 11 after fixing the lighting device to the flush mounting box 1.

This advantageous manner of fixing the elements of the lighting device is not possible in those lighting devices of the prior art which reserve their central part for lighting devices.

Module 5 includes conventional emergency lighting device elements such as batteries 25. According to the invention, it includes LEDs 27 for providing the emergency light and LEDs 29 for providing the signaling light. A person skilled in the art will understand that module 5 also includes other elements that are not explained in detail since they are well known in the art.

LEDs 27 are arranged according to openings 31 in the intermediate plate 9 and the cover 11 so that they can project light directly upon the diffusing element 13. In the preferred embodiment of the invention LEDs projecting white light are used.

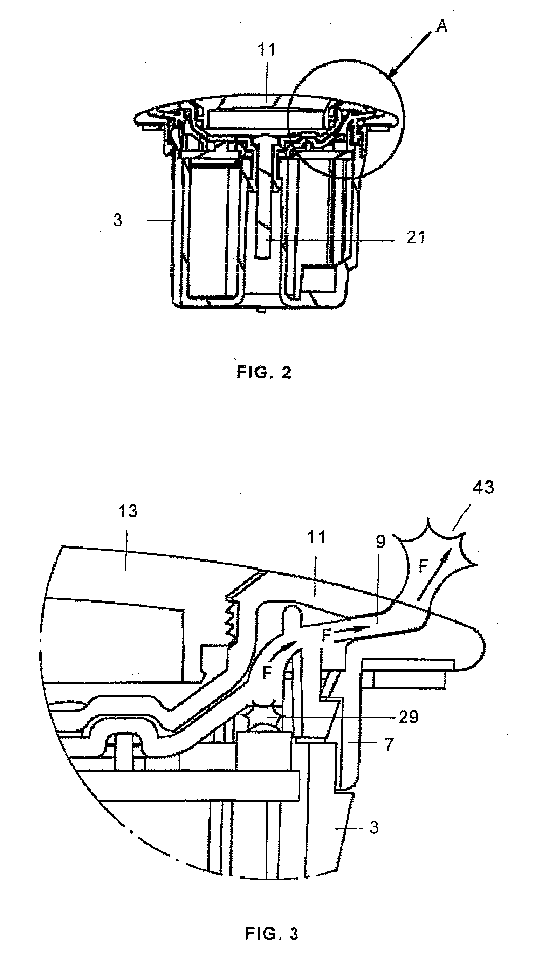

LEDs 29 are arranged on the edges of module 5 and, as can be seen more clearly in Figure 3, the intermediate plate 9 is configured so that it receives the signaling light projected by them on its lower portion and transports it following the arrows F towards a front area 43 of the lighting device, adjacent to the cover 11. In the preferred embodiment of the invention, LEDs projecting blue light are used, but lights of other colors can also be used.

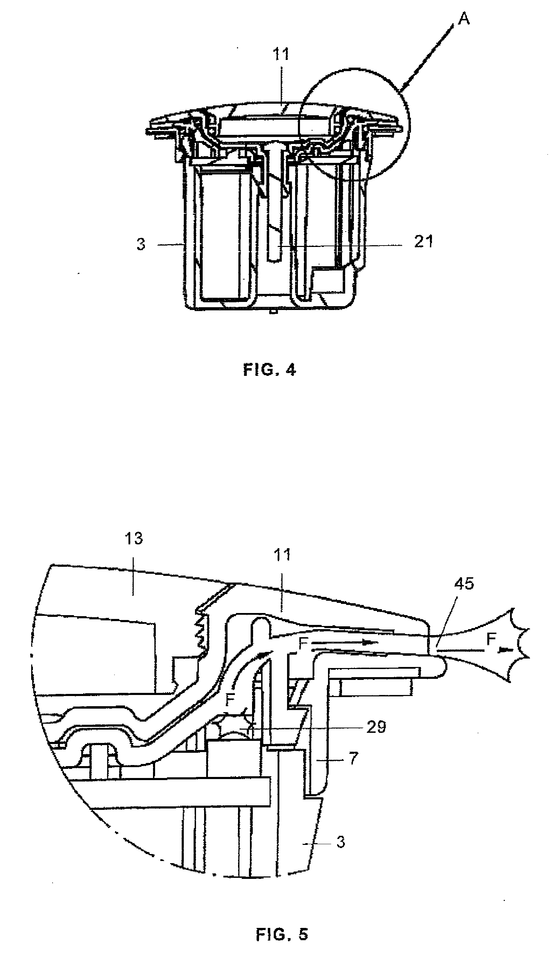

In the embodiment shown in Figures 4 and 5, the intermediate plate 9 is configured so that it receives the signaling light projected by the LEDs 29 on its lower portion and transports it following the arrows F towards the side area 45 of the lighting device.

For its part, the auxiliary plate 7 is configured so that it serves as a support to the intermediate plate 9 and facilitates its integration in the body 3.

The intermediate plate 9 can be made of a transparent, semitransparent or translucent material. A suitable material is polycarbonate. The intermediate plate 9 allows adequately controlling the location of the signaling light in the lighting device with the advantages that this implies.

The cover 11 and the auxiliary plate 7 are preferably made of a metal material.

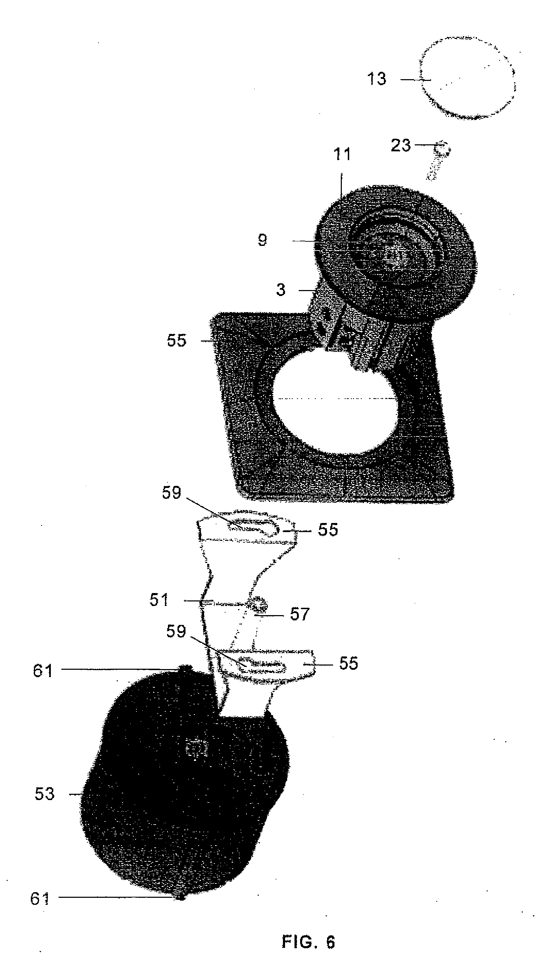

The lighting device can incorporate the adaptor part 51 shown in Figure 6 for installing the lighting device in a universal flush mounting box 53 provided with a decorative cover 55.

The adaptor part 51 has a U shape with upper wings 55 and includes a threaded rod 57 projecting from the center of its base in order to receive the hollow turret 21 of the body 3 and cooperate with the screw 23. In the upper wings 55 it has slits 59 which allow introducing fixing means through them in diametrical openings 61 provided to this effect on the universal flush mounting box 53.

Although an embodiment of the invention has been described and represented, it is obvious that modifications comprised within the scope thereof may be introduced, and the scope must not be considered limited to said embodiment, but only to the content of the following claims.

## Claims

1. An emergency lighting device of the type used on stairs or ramps for indicating evacuation routes comprising a module (5) containing components that provide, respectively, the signaling light and the emergency light in the circumstances foreseen for each case, a cover (11), a diffusing element (13) for the emergency light located on the central portion of the cover (11), and a body (3) on which the remaining elements of the lighting device are integrated, **characterized in that** it also comprises an intermediate plate (9) between the module (5) and the cover (11) made of a light transmitting material that is configured for receiving on its lower portion the signaling light provided by a plurality of LEDs (29) and transporting it outwards from the lighting device.

2. An emergency lighting device according to claim 1, **characterized in that** the configuration of the intermediate plate (9) and the cover (11) includes openings (31) so that the elements (27) providing the emergency light coincide upon these and may project their light directly towards the diffusing element (13).

3. An emergency lighting device according to claim 2, **characterized in that** it also comprises an auxiliary plate (7) configured to facilitate integration of the intermediate plate (9) in the body (3).

4. An emergency lighting device according to claim 3, **characterized in that** the intermediate plate (9) transports the signaling light towards a front area (43) of the lighting device that is adjacent to the cover (11).

5. An emergency lighting device according to claim 3, **characterized in that** the intermediate plate (9) transports the signaling light towards a side area (45) of the lighting device located above the auxiliary plate (7).

6. An emergency lighting device according to claim 3, **characterized in that** the body (3) includes a hollow turret (21) in its central part that facilitates fixing the lighting device to a flush mounting box (1, 53) by means of a screw (23) passing through said hollow turret (21).

7. An emergency lighting device according to claim 6, **characterized in that** it also comprises an adaptor part (51) for adapting it to a universal flush mounting box (53) configured in a U shape with upper wings (55), with a threaded duct (57) projecting from the center of its base in order to cooperate with the screw (23) and slits (59) on the upper wings (55) in order to allow introducing fixing means through them and through the diametrical openings (61) provided to that effect on the universal flush mounting box (53).

8. An emergency lighting device according to any of the previous claims, **characterized in that** the emergency light is provided by LEDs.

9. An emergency lighting device according to any of the previous claims, **characterized in that** the emergency light and the signaling light are of different colors.
